# EUROPÄISCHE PATENTSCHRIFT

(11) **EP 0 354 443 B1**
(45) Veröffentlichungstag und Bekanntmachung des Hinweises auf die Patenterteilung: **12.05.1993**
(21) Anmeldenummer: 89114148.3
(22) Anmeldetag: 01.08.1989
(51) Int. Cl.: C05F 17/02

(54) **Vorrichtung zur Herstellung von Kompost**
Apparatus for the manufacture of compost
Appareil pour la fabrication de compost

(30) Priorität: 11.08.1988 DE 3827282
(43) Veröffentlichungstag der Anmeldung: 14.02.1990
(73) Patentinhaber: Lescha Maschinenfabrik GmbH & Co. KG, D-86368 Gersthofen (DE)
(72) Erfinder: König, Norbert, D-8900 Augsburg (DE); Kasberger, Peter, D-8901 Aystetten (DE)
(74) Vertreter: Munk, Ludwig, Dipl.-Ing.

(56) Entgegenhaltungen:
- DE-A- 3 626 902
- DE-A- 3 626 903
- FR-A- 862 850
- GB-A- 1 022 127

## Beschreibung

Die Erfindung betrifft eine Vorrichtung zur Herstellung von Kompost gemäß Oberbegriff des Anspruchs 1.

Eine Anordnung dieser Art ist aus der DE-A 36 26 903 bekannt. Die bei dieser bekannten Anordnung vorgesehenen Luken sind Einwurfluken, über die die Trommel befüllbar ist. Die diesen Einwurfluken zugeordneten Klappen sind gesteuerte Klappen, die mittels eines mit einer Steuerkurve zusammenwirkenden Steuerhebels entgegen der Kraft einer Schließfeder zwangsweise geöffnet werden, wenn sich die Luke unterhalb eines über der Trommel angeordneten Einwurftrichters befindet und die außerhalb dieser Befüllstellung durch die zugeordnete Schließfeder zwangsläufig in der Schließstellung gehalten werden. Ein Auswurf von Material über die genannten Einwurfluken ist hierbei nicht möglich und auch nicht erwünscht. Vielmehr soll hier der Trommelinhalt ausschließlich über die den Trommelmantel bildenden Lochbleche abgesiebt werden.

Bei Anordnungen vorliegender Art ist der Inhalt der Trommel jedoch nicht homogen, sondern erhält gröberes und feineres Material. Mittels der den Trommelmantel bildenden Lochbleche wird jedoch nur feineres Material abgesiebt. Das gröbere Material wird in der Trommel zurückgehalten, so daß sich im Laufe der Zeit eine verstärkte Ansammlung von grobem Material in der Trommel ergibt. Beim groben Material handelt es sich erfahrungsgemäß um zusammengebackene Klumpen von Verrottungsmaterial. Diese Klumpen sind infolge ihrer dichten Konsistenz verrottungstechnisch äußerest inaktiv und beeinträchtigen daher den Verrottungsprozeß insgesamt negativ. Diese Erscheinung wird bei Anordnungen der bekannten Art durch die in der rotierenden Trommel aufgrund der Coriolis-Beschleunigung zwangsläufig stattfindenden Entmischung noch verstärkt. Aufgrund dieser Entmischung ergeben sich Zonen mit einer verstärkten Ansammlung des gröberen, verrottungstechnisch inaktiven Materials und dementsprechend Zonen, die verrottungstechnisch inaktiv oder nur wenig aktiv sind. Hierdurch wird der erzielbare Materialdurchsatz stark beeinträchtigt.

Hiervon ausgehend ist es daher die Aufgabe der vorliegenden Erfindung, eine Vorrichtung eingangs erwähnter Art mit einfachen und kostengünstigen Mitteln so zu verbessern, daß eine möglichst gleichmäßige Verteilung von grobem und feinem Material erreichbar ist und dennoch eine einfache Bauweise und hohe Bedienungsfreundlichkeit gewährleistet sind.

Diese Aufgabe wird erfindungsgemäß durch die kennzeichnenden Maßnahmen des Anspruchs 1 gelöst.

Diese Maßnahmen bieten die Möglichkeit, der Trommel grobes Material zu entnehmen, welches durch die umfangsseitigen Siebbleche zurückgehalten wird. Es ist daher möglich, in der Trommel vorhandene Klumpennester aufzulösen und die Klumpen unter vorteilhafter Nutzung der vorhandenen Materialrückführung in die Trommel zurückzuführen, wobei die genannten Klumpen mit aktivem Material umgeben und vermischt werden, was ihre Verrottung beschleunigt. Die Klumpen fallen bei entsprechender Drehrichtung der Trommel im Bereich der erfindungsgemäßen Auswurfluken selbsttätig aus der Trommel heraus. Die Erfindung macht sich dementsprechend die aufgrund der Coriolis-Beschleunigung sich ergebende, an sich unerwünschte Entmischung in der Trommel sowohl zur Entnahme des Grobmaterials als auch zur Bewerkstelligung eines mehrfachen Materialumlaufs in axialer Richtung und damit einer besonders guten Homogenisierung des Materials zunutze. Gleichzeitig ermöglichen die erfindungsgemäßen Maßnahmen aber auch eine Schnellentleerung der Trommel. Ein weiterer Vorteil der erfindungsgemäßen Maßnahmen ist darin zu sehen, daß die erfindungsgemäßen Auswurfluken einfach durch entsprechende Wahl der Drehrichtung der Trommel geöffnet bzw. geschlossen werden können und dann aufgrund des Materialdrucks während einer Umdrehung in der betreffenden Stellung bleiben. Steuereinrichtungen sind hierzu nicht erforderlich, was eine höchst einfache Bauweise ergibt.

Die vermehrte Ansammlung von Klumpen findet üblicherweise im Bereich des in Beschickungsrichtung vorderen Trommelendes statt. Zweckmäßig werden daher die Auswurfluke bzw. -luken in diesem Trommelbereich angeordnet.

Eine weitere, besonders zu bevorzugende Ausgestaltung der übergeordneten Maßnahmen kann darin bestehen, daß wenigstens eine mittels der die Trommel unterfaßten Längsfördereinrichtung direkt oder indirekt mit aus der Trommel herausfallendem Material beaufschlagbare Zerkleinerungseinrichtung vorgesehen ist. Diese Maßnahmen ermöglichen in vorteilhafter Weise eine mechanische Nachzerkleinerung von der Trommel entnommenem Grobmaterial, wie Klumpen und dergleichen, was die erzielbare Verrottungsgeschwindigkeit und damit die Durchsatzgeschwindigkeit erhöht. Hierzu ist es möglich, im Bereich der Längsfördereinrichtung und/oder der Beschickungseinrichtung eine zusätzliche Zerkleinerungseinrichtung vorzusehen. Eine weitere Möglichkeit besteht darin, das aus der Trommel herausfallende Material der ohnehin vorhandenen Eingangszerkleinerungseinrichtung zuzuführen, mit welcher auch das der Trommel neu zuzuführende Material zerkleinert wird.

Weitere zweckmäßig Fortbildungen und vorteilhafte Ausgestaltungen der übergeordneten Maßnahmen ergeben sich aus der nachstehenden Beschreibung einiger Beispiele anhand der Zeichnung in Verbindung mit den restlichen Unteransprüchen.

In der Zeichnung zeigen:
- Figur 1: eine Seitenansicht einer erfindungsgemäßen Kompostierungsvorrichtung,
- Figur 2: einen Querschnitt durch die Trommel der genannten Kompostierungsvorrichtung mit geöffneten Luken,
- Figur 3: einen Querschnitt durch die Trommel der genannten Kompostierungsvorrichtung mit geschlossenen Luken,
- Figur 4: eine vergrößerte Seitenansicht einer in die Längsfördereinrichtung integrierten Zerkleinerungseinrichtung,
- Figur 5: eine vergrößerte Darstellung einer in die Beschickungseinrichtung integrierten Zerkleinerungseinrichtung,
- Figur 6: eine schematische Ansicht einer Kompo-stierungsvorrichtung mit mit Trommelmaterial beschickbarer Eingangszerkleinerungseinrichtung und
- Figur 7: eine Teilansicht der Anordnung gemäß Figur 6.

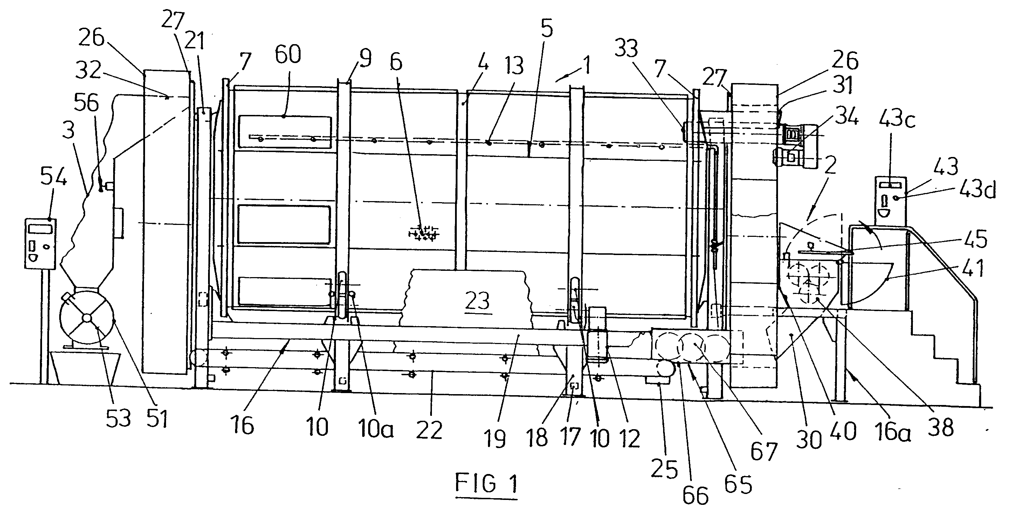

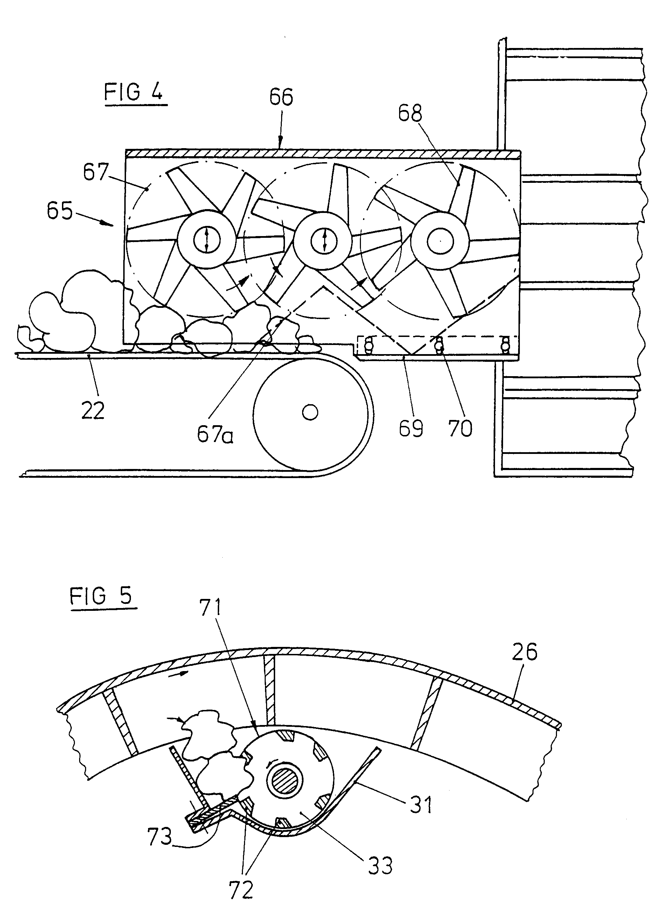

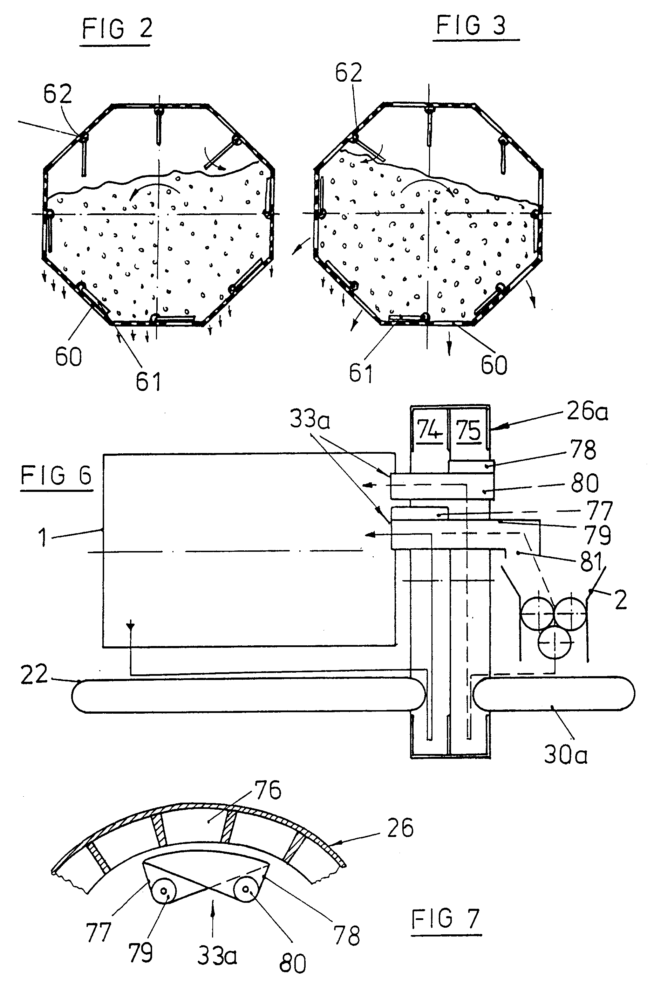

Die in Figur 1 dargestellte Kompostierungsvorrichtung besteht aus einer um ihre Längsachse (a) drehbar gelagerten, in Umfangsrichtung vorwärts und rückwärts antreibbaren, eine Rottezelle bildenden Trommel 1, der eine im Bereich ihrer in der Zeichnung rechten Stirnseite angeordnete Eingangszerkleinerungseinrichtung 2 zur Zerkleinerung des Eingangsmaterials vorgeordnet und ein im Bereich ihrer in der Zeichnung linken Stirnseite angeordneter Bunker 3 zur Aufnahme des fertigen Komposts nachgeordnet sind. Der Mantel der Trommel 1 besteht aus einem durch Längs- und Querholme 4 gebildeten Traggerüst, das durch Lochbleche 5 ausgefacht ist. Die Trommel 1 besitzt hier, wie am besten aus Figuren 2 und 3 erkennbar ist, einen achteckförmigen Querschnitt. Die Lochbleche 5 können dabei als ebene Bleche ausgebildet sein, die im Bereich der Querschnittsecken mit aufgebogenen Randkanten aneinander anliegen. Die Mehreckigkeit des Trommelquerschnitts erzeugt einen guten Mischeffekt und vereinfacht die Herstellung. Die Trommelstirnwände 7 sind hier stationär angeordnet.

Der Trommelmantel ist von zwei kreisförmig umlaufenden, U-förmigen Laufringen 9 umfaßt, die auf einander gegenüberliegenden Laufrollen 10 aufgenommen sind. Der Abstand der einander gegenüberliegenden Laufrollen 10 ist etwas kleiner als der größte Trommeldurchmesser, so daß die Laufringe 9 mit ihrem unteren Umfangsbereich auf den Laufrollen 10 aufliegen. Die Laufrollen 10 sind auf einem die Trommel 1 unterfassenden Gestell aufgenommen, das aus auf durch Traversen 17 miteinander verbundenen Stützen 18 aufgenommenen Längsholmen 19 besteht, auf denen den Laufrollen 10 zugeordnete Halter aufgenommen sind. An den Enden der Längsholme 19 sind zur Aufnahme der stationären Trommelwände 7 dienende, portalartige Rahmen 21 befestigt.

Mindestens eine der Laufrollen 10 ist mit einem Antriebsmotor 12 drehschlüssig verbunden, der zum Antrieb der trommel 1 aktivierbar ist. Der Motor 12 ist mittels einer Steuerungseinrichtung u.a. in Abhängigkeit von Verrottungsparametern wie Temperatur und Feuchtigkeit, sowie in Abhängigkeit von Betriebsparametern wie Füllstand der Trommel bzw. des Bunkers etc., aktivierbar. Diese Verrottungs- bzw. Betriebsparameter sind mit Hilfe geeigneter, innerhalb der Trommel 1 bzw. des Bunkers 3 angeordneter Fühler meßbar, die am Eingang einer Steuerungseinrichtung liegen, welche die Eingangssignale in geeignete Steuersignale umsetzt. Bei Verarbeitung von sehr trockenem Eingangsmaterial kann eine zusätzliche Befeuchtung des Trommelinhalts erfolgen. Hierzu ist im dargestellten Ausführungsbeispiel eine über eine stationäre Stirnwand 7 in den Trommelinnenraum eingeführte, mit Düsen versehene Wasserleitung 13 vorgesehen.

Die Löcher 6 der Lochbleche 5 dienen zur Belüftung des Innenraums der Trommel 1 und zum Absieben von fertigem Kompost. In einfachen Fällen kann der Durchmesser der Löcher 6 der Lochbleche 5 auf der ganzen Trommellänge gleich sein. In manchen Fällen hat es sich bewährt, wenn der Durchmesser der Löcher 6 in Beschickungsrichtung der trommel 1 zunimmt, hier als von rechts nach links. Dies trägt dem Rechnung, daß das Verrottungsmaterial zum Zusammenbacken neigt.

Um auch gröberes Material, z.B. durch Zusammenbacken von Kompostmaterial gebildete, dichte Klumpen, aus der Trommel 1 entnehmen zu können, ist der Trommelmantel im Bereich eines durch zwei in Umfangsrichtung verlaufende Holme 4 begrenzten Trommellängenabschnitts mit mehreren Luken 60 am Umfang versehen. Im dargestellten Ausführungsbeispiel ist im Bereich jedes ebenen Umfangsfelds der im Querschnitt mehreckigen Trommel jeweils eine Luke 60 vorgesehen, wie die Figuren 2 und 3 am besten erkennen lassen. Die Luken 60 sind, wie die Figuren 2 und 3 weiter zeigen, durch eine jeweil zugeordnete Klappe 61 von innen verschließbar. Die Klappen 61 sind im Bereich einer trommelachsparallelen Randkante schwenkbar gelagert. Die hierzu benötigten Lagerböcke sind auf die Innenseite des Trommelmantels im Bereich des zugeordneten trommelachsparallelen Rands der jeweils zugeordneten Luke 60 aufgesetzt.

Um eine Umwälzung der Trommelfüllung zu gewährleisten, bleibt im oberen Trommelbereich ein gewisser Leerraum. Die lediglich an einem Rand gelagerten Klappen 61 hängen dementsprechend beim Durchgang durch den oberen Trommelscheitelbereich aufgrund ihrer Schwerkraft etwa lotrecht nach unten, wie die Figuren 2 und 3 weiter erkennen lassen. Wenn die Trommel 1 nun so dreht, daß die Schwenkachse 62 der Klappen 61 in Drehrichtung nachläuft, wie in Figur 2, dann werden die Klappen 61 durch den zur nach unten gehenden Trommelhälfte rutschenden Trommelinhalt an den Rand der jeweils zugeordneten, in Drehrichtung vorauslaufenden Luke 60 angelegt, womit diese verschlossen wird. Wenn die Trommel so dreht, daß die Schwenkachse 62 der Klappen 61 diesen in Drehrichtung vorläuft, wie in Figur 3 dargestellt, werden die Klappen 61 durch das zur nach unten gehenden Trommelhälfte rutschende Material von der jeweils zugeordneten, nachlaufenden Luke 60 weggeklappt, womit diese geöffnet ist. In diesem Falle kann grobes Material in Form von Klumpen etc. aus der Trommel herausfallen. Die Frage, ob grobes Material entnommen wird oder nur Feinmaterial abgesiebt wird, hängt dementsprechend ausschließlich von der Drehrichtung der Trommel 1 ab. Dementsprechend ist der Trommelantriebsmotor 12 umsteuerbar.

Die Luken 60 und Klappen 61 sind so ausgebildet und angeordnet, daß in jedem Falle eine satte Anlage der Klappen 61 entweder am Lukenrand (Fig. 2) oder am den Luken vorauslaufenden Mantelbereich (Fig. 3) gewährleistet ist. Hierzu befindet sich die Schwenkachse 52 der Klappen 61 etwa im Bereich der Kantenmitte der Querschnittskanten des mehreckigen Trommelquerschnitts. Die Erstreckung der Luken 60 in Umfangsrichtung ist etwas kleiner als die halbe Querschnittskantenlänge, so daß die Klappen 61 im umgeklappten Zustand nicht über die vorauslaufende Querschnittskante hinweggehen, was eine Biegebeanspruchung der Klappen 61 verhindert. Die Klappen 61 können daher als einfache Bleche ausgebildet sein. Es wäre auch denkbar, die die Klappen 61 bildenden Bleche als Lochbleche auszubilden, so daß in der Schließstellung der Klappen 61 auch im Bereich der Klappen eine Absiebung von feinem Material sowie eine Belüftung der Trommel erfolgen können.

Die Beaufschlagung der Trommel 1 erfolgt bei der Ausführung gemäß Figur 1 im Bereich der rechten Trommelstirnseite. Aufgrund der bei sich drehenden Systemen vorhandenen Coriolis-Beschleunigung wird bewirkt, daß grobe Teile schneller zur in Beschickungsrichtung vorderen, linken Trommelstirnseite wandern als feine Teile. Dies gilt dementsprechend insbesondere auch für aus Verrottungsmaterial bestehende Klumpen. Das in der Trommel 1 verrottende Material neigt nämlich vielfach dazu, zu dichten Klumpen zusammenzubacken, die durch die Löcher 6 der Lochbleche 5 nicht mehr durchfallen können. Die in Umfangsrichtung umlaufende Lukenreihe mit jeweils einer Luke 60 in jedem Umfangsfeld befindet sich dementsprechend im dargestellten Ausführungsbeispiel im Bereich des an die linke Trommelstirnseite sich anschließenden Trommellängenabschnitts. Durch den Abbau der dort sich bildenden Klumpennester und die Rückführung dieses Materials in die Trommel 1 im Bereich der rechten Trommelstirnseite ergibt sich eine Vergleichmäßigung der Verrottungstätigkeit über der Trommellänge.

Zum Abtransport des aus der Trommel herausfallenden Materials ist eine die Trommel untergreifende Längsfördereinrichtung in Form eines Bandförderers 22 vorgesehen. Der Rahmen des Bandförderers 22 ist auf den Traversen 17 aufgelegt. Dieser Bandförderer 22 befindet sich an der tiefsten Stelle eines den unteren Umfangsbereich der Trommel 1 umfassenden, durch trichterförmig angeordnete, auf dem Gestell 16 aufgenommene Bleche 23 gebildeten Schachts. Die Bleche 23 kragen dabei so weit aus, daß alles durch die Löcher 6 und Luken 60 aus der Trommel 1 herausfallende Material aufgefangen wird.

Der Bandförderer 22 ist mittels eines Motors 25 antreibbar, der automatisch zusammen mit dem Motor 12 zum Antrieb der Trommel 1 aktivierbar ist. Die Antriebseinrichtung des Bandförderers 22 ist so umsteuerbar, daß das aus der Trommel herausgefallene Material entweder dem Bunker 3 zugeführt oder in die Trommel 1 zurückgeführt werden kann. Hierzu wirkt der Bandförderer 22 im Bereich seiner Enden mit zum Bunker 3 bzw. mit zur Trommel 1 führenden Hubfördereinrichtungen zusammen. Diese sind im dargestellten Ausführungsbeispiel als im Bereich der Trommelstirnseiten mit zur Trommelachse parallel versetzter Achse angeordnete Elevatorräder 26 ausgebildet, die den Höhenunterschied zwischen dem die Trommel 1 untergreifenden Bandförderer 22 und der Einwurföffnung des Bunkers 3 bzw. der Trommel 1 überbrücken. Die Elevatorräder 26 sind auf den den stationären Trommelstirnwänden 7 gegenüberliegenden Seiten der portalförmigen Rahmen 21 des Gestells 16 gelagert. Hierzu sind die Elevatorräder 26 im Bereich ihrer inneren, d. h. trommelseitigen Stirnseite jeweils mit einem umlaufenden Laufkranz 27 versehen, in den gestellseitig angeordnete Laufrollen eingreifen, von denen eine mittels eines zugeordneten Motors antreibbar ist. Die Antriebsmotoren der Elevatorräder 26 sind zusammen mit dem Antriebsmotor 25 des das eine oder andere Elevatorrad 26 beaufschlagenden Bandförderers 22 aktivierbar, so daß ein zuverlässiger Abtransport des vom Bandförderer 22 abgeworfenen Materials gewährleistet ist.

Der Bandförderer 22 wirft das auf ihm gesammelte Material über an seinen Enden angeordnete Brücken etc. von innen in das eine oder andere Elevatorrad 26 ein. In das der Trommel 1 zugeordnete, in Figur 1 rechts gezeichnete Elevatorrad 26 wird von außen auch das mittels der Zerkleinerungseinrichtung 2 zerkleinerte Eingangsmaterial eingeworfen. Die Zerkleinerungseinrichtung 2 ist hierzu mit einem in das Elevatorrad 26 eingreifenden, im unteren Scheitelbereich ausmündenden Auswurfschacht 30 versehen. Der Antrieb des trommelseitigen Elevatorrads 26 wird daher auch gleichzeitig mit dem Antrieb der Zerkleinerungseinrichtung 2 aktiviert. Die Elevatorräder 26 kippen den Inhalt ihrer Schaufeln im oberen Scheitelbereich in jeweils einen in sie eingreifenden trommelseitigen bzw. bunkerseitigen Auffangtrichter 31 bzw. 32 ein. Der bunkerseitige Auffangtrichter 32 kann einfach als in das zugeordnete Elevatorrad 26 eingreifende, nasenförmige Auskragung der benachbarten Bunkerwandung ausgebildet sein. Der trommelseitige Auffangtrichter 31 ist Teil einer der Trommel 1 zugeordneten Beschickungseinrichtung.

Diese umfaßt im dargestellten Ausführungsbeispiel eine an den Auffangtrichter 31 angebaute, durch die benachbarte Trommelstirnwand 7 im oberen Scheitelbereich der Trommel in den Trommelinnenraum eingeführte Förderschnecke 33. Diese ist mittels eines an ihr auf der stationären Trommelstirnwand 7 aufgenommenen Gehäuse angesetzten Antriebsmotors 34 antreibbar, der mit dem Antrieb des trommelseitigen Elevatorrads 36 so gekoppelt ist, daß eine gemeinsame Aktivierung erfolgt. Die Abwurfkante der Schnekke 33 befindet sich im Bereich der Innenseite der Stirnwand 7, durch die hindurch die Materialzufuhr zur Trommel 1 erfolgt.

Um die über die Luken 60 gezielt aus der Trommel 1 entnehmbaren Klumpen bzw. gröberen Materialteile zerkleinern zu können, ist auf dem bei der Rückführung des aus der Trommel 1 entnommenen Materials in die Trommel 1 vom Material zurückzulegenden Transportweg eine Zerkleinerungseinrichtung vorgesehen. Bei der Ausführung gemäß Figur 1 ist eine mit dem die Längsfördereinrichtung bildenden Bandförderer 22 zusammenwirkende Zerkleinerungseinrichtung 65 vorgesehen. Diese besteht aus drei in einem umfangsseitig geschlossenen Schacht 66 hintereinander angeordneten, umfangsseitig miteinander kämmenden Scheibenwalzen 67. diese besitzen, wie am besten aus Figur 4 hervorgeht, etwa sternförmig konfigurierte, seitlich voneinander beabstandete Messerscheiben 68. Die Messerscheiben 68 einander benachbarter Scheibenwalzen 67 sind seitlich gegeneinander versetzt, d. h. auf Lücke gesetzt, so daß gegenseitige Kollisionen ausgeschlossen sind. Die drei Scheibenwalzen 67 können so angetrieben werden, daß sich ein die mittlere Walze schleifenartig umgebender Weg des zu zerkleinernden Materials ergibt. Hier werden alle drei Scheibenwalzen 67 gleichsinnig im Gegenuhrzeigersinn angetrieben, so daß ihre nach unten weisenden Umfangsabschnitte eine Transportkomponente in Förderrichtung aufweisen, wie in Figur 4 durch Richtungspfeile angedeutet ist.

Um hierbei eine zuverlässige Materialzerkleinerung zu gewährleisten, ist wenigstens einer Scheibenwalze 67, hier der mittleren und hinteren, jeweils eine quer zur Förderrichtung verlaufende, im Bereich des Schachtbodens vorgesehene, stationäre Gegenleiste 67a zugeordnet. Diese besteht aus seitlich voneinander distanzierten, zu den Messerscheiben 68 der zugeordneten Walze auf Lücke gesetzten Laschen, die in den Hüllkreis der zugeordneten Scheibenwalze hineinragen. Die Gegenleisten 67a bilden dementsprechend einen Rost, dessen Schlitze von den Messern einer zugeordneten Messerscheibe 68 durchlaufen werden. Im Ausführungsbeispiel gemäß Figur 4 besitzt die der mittleren Scheibenwalze zugeordnete Gegenleiste 67a geneigte, dachförmige Flanken, um Kollisionen mit den benachbarten Scheibenwalzen zu vermeiden. Die der hinteren Scheibenwalze zugeordnete Gegenleiste besitzt eine geneigte Flanke.

Der Schacht 66 übergreift das zugeordnete Ende des Bandförderers 22 und ist dementsprechend im Übergreifungsbereich bodenseitig ausgenommen. Der an den Bandförderer 22 anschließende, hier die Gegenleisten 67a tragende Schachtboden 69 bildet praktisch eine zur benachbarten fördereinrichtung 26 führende Rutsche, deren Abwurfkante wie die Abwurfkante des Auswurfschachts 30 der Eingangszerkleinerungseinrichtung 2 das hier zur Bildung der Hubfördereinrichtung im Bereich der beschickungsseitigen Trommelstirnseite vorgesehene Elevatorrad 26 im unteren Scheitelbereich übergreift. Die Neigung des Schachts 66 ist einstellbar, wie durch die in Figur 4 dargestellte Stift-Schlitzverbindung 70 angedeutet ist. Der Bodenabstand der Scheibenwalzen 67 ist ebenfalls einstellbar, wie in Figur 4 durch Doppelpfeile angedeutet ist.

Zusätzliche oder alternativ zur Zerkleinerungseinrichtung 65 kann auch im Bereich der hier durch die Schnekke 33 gebildeten Beschickungseinrichtung eine Zerkleinerungseinrichtung 71 vorgesehen sein. Bei einer derartigen, der Figur 5 zugrundeliegenden Ausführung, ist die hier die Beschickungseinrichtung bildende, d. h. die Trommel 1 beaufschlagende Schnecke 33 am Umfang mit mehreren, in axialer Richtung durchgehenden, vorzugsweise leicht gewundenen Messern 72 versehen, die an einem stationären Gegenmesser 73 vorbeilaufen. Dieses kann am die Schnecke 33 umfassenden Schneckengehäuse befestigt sein. Die hier vorgesehene Messerschnecke bewirkt einerseits einen Axialtransport und andererseits eine gleichzeitige Zerkleinerung des in ihren Wirkbereich kommenden Materials, d. h. des vom Elevatorrad 26 in den Auffangtrichter 31 der Beschickungseinrichtung eingeworfenen Materials.

Bei der den Figuren 6 und 7 zugrundeliegenden Ausführung wird zum Zerkleinern von aus der Trommel 1 entnehmbaren Klumpen und dergleichen einfach die Eingangszerkleinerungseinrichtung 2 benutzt. Die im Bereich der beschickungsseitigen Stirnseite der Trommel vorgesehene Hubfördereinrichtung 26a und die hieran anschließende Beschickungseinrichtung 33a sind hierzu so ausgebildet, daß das von der die Trommel 1 untergreifenden Längsfördereinrichtung 22 in die Hubfördereinrichtung 26a eingeworfene Material entweder direkt der Trommel 1 zugeführt werden kann, wie in Figur 6 mit einer durchgehenden Pfeillinie angedeutet ist, oder, wie durch eine gestrichelte Pfeillinie angedeutet ist, über die Eingangszerkleinerungseinrichtung 2 umgeleitet und anschließend wie neues Eingangsmaterial der Trommel 1 zugeführt wird.

Hierzu enthält die Hubfördereinrichtung 26a zwei in Achsrichtung hintereinander angeordnete Hubförderer. Im dargestellten Ausführungsbeispiel ist das diese Doppelhubfördereinrichtung 26a bildende Elevatorrad hierzu mit zwei nebeneinander angeordneten, umlaufenden Kränzen 74 bzw. 75 hintereinander angeordneter Kammern 76 versehen, wobei der trommelseitige Kranz 74 durch den Bandförderer 22 und der von der Trommel 1 abgewandte, äußere Kranz 75 durch die Eingangszerkleinerungseinrichtung 2 bzw. ein dieser zugeordnetes Förderorgan in Form des Auswurfschachts 30 bzw. eines anstelle dessen vorgesehenen Förderbands 30a beaufschlagbar sind, wie am besten aus Figur 6 erkennbar ist. Die das im oberen Scheitelbereich des Doppelelevatorrads 26a aus dessen Kammern 76 herausfallende Material auffangende Beschickungseinrichtung 33a besteht aus zwei Beschickungsorganen. Im dargestellten Ausführungsbeispiel enthalten diese, wie am besten aus Figur 7 erkennbar ist, jeweils einen einen zugeordneten Kranz 74 bzw. 75 des Doppelelevatorrads 26a untergreifenden Auffangtrichter 77 bzw. 78. Von jedem Auffangtrichter geht jeweils eine bodenseitig anschließende Förderschnecke 79 bzw. 80 ab. Die Auffangtrichter 77, 78 sind dementsprechend in Trommelachsrichtung gegeneinander versetzt und spiegelbildlich zueinander angeordnet, so daß einerseits ihre Öffnungsquerschnitte im selben Umfangsbereich des Doppelelevatorrads 26 liegen und die an die Auffangtrichter sich anschließenden Förderschnecken 79, 80 parallel gegeneinander versetzt sind, wie Figur 7 anschaulich erkennen läßt.

Bei-de Förderschnecken 79 bzw. 80 führen über die benachbarte Trommelstirnwand in die Trommel 1 hinein. Die an den dem inneren, trommelseitigen Kranz 74 zugeordneten Auffangtrichter 77 sich anschließende Förderschnecke 79 weist eine der trommelseitigen Abwurfkante gegenüberliegende, weitere Abwurfstelle 81 auf, die hier die Eingangszerkleinerungseinrichtung 2 übergreift. Hierzu ist die Förderschnecke 79 sowohl trommelseitig als auch der Trommel 1 gegenüberliegend aus dem Doppelelevatorrad 26a herausgeführt. Je nach Drehrichtung der Förderschnecke 79 wird das von dieser eingezogene Material entweder der Trommel 1 oder der Eingangszerkleinerungseinrichtung 2 zugeführt. Die vom von der Trommel 1 abgewandten Kranz 75 beaufschlagbare Förderschnecke 80 besitzt lediglich eine trommelseitige Abwurfstelle und wird immer so angetrieben, daß die Trommel 1 beaufschlagt wird.

Mit Hilfe der vorstehend beschriebenen Anordnung ist es somit möglich, neues Material, das die Eingangszerkleinerungseinrichtung 2 passiert hat, direkt der Trommel 1 zuzuführen. Hierzu ist die Förderschnecke 80 im Betrieb. Ebenso kann aus der Trommel 1 abgesiebtes Material direkt der Trommel wieder zugeführt werden. Hierzu ist die Förderschnecke 79 in Betrieb und zwar in einer Drehrichtung, die eine Zuförderung zur Trommel 1 bewirkt. Durch Richtungsumkehr der Förderschnecke 79 ist es möglich, durch diese die Eingangszerkleinerungseinrichtung 2 zu beaufschlagen, wodurch sich im Falle einer Drehung der Trommel 1 gemäß Figur 3 aus der Trommel 1 herausfallende Klumpen zerkleinern lassen. Der Antrieb der Förderschnecke 79 wird dementsprechend so gesteuert, daß sich bei einer Drehrichtung der Trommel 1 gemäß Figur 2 eine zur Trommel 1 fördernde Drehrichtung und bei der Drehrichtung der Trommel 1 gemäß Figur 3 eine zur Eingangszerkleinerungseinrichtung 2 hin transportierende Drehrichtung ergeben. Das die Eingangszerkleinerungseinrichtung 2 passierende Material wird dabei anschließend mittels des äußeren Kranzes 75 dem weiteren Beschickungsorgan in Form des Auffangtrichters 78 mit zugeordneter Förderschnecke 80 zugeführt, die die Trommel beaufschlagt. Die Förderschnecke 80 ist dementsprechend immer gemeinsam mit der Eingangszerkleinerungseinrichtung 2 in Betrieb, die sowohl zur Zerkleinerung von neuem Material als auch automatisch bei einer Drehrichtung der Trommel gemäß Figur 3 läuft.

Das Gehäuse 40 der Eingangszerkleinerungseinrichtung 2 ist auf einer durch das zugeordnete Elevatorrad 26 hindurchgreifenden Verlängerung 16a des Gestells 16 stationär aufgenommen. Das Gehäuse 40 ist nach oben offen. Zur Bewerkstelligung einer protionsweisen Beaufschlagung des Mahlwerks der Zerkleinerungseinrichtung ist hier ein wannenförmiger Eingabebehälter 41 vorgesehen, der von einer in Figur 1 mit durchgezogenen Linien dargestellten, über das Gehäuse 40 auskragenden Befüllstellung in eine mit gestrichelten Linien dargestellte, das Gehäuse 40 übergreifende Entleerstellung schwenkbar ist, in der sein Inhalt auf das Mahlwerk abgekippt wird. Das Fassungsvermögen des Eingabebeh-älters 41 ist wesentlich kleiner als das Fassungsvermögen der Trommel 1, so daß eine größere Anzahl von Füllungen des Eingabebehälters 41 in die Trommel 1 eingegeben werden kann, bevor deren Aufnahmevermögen erschöpft ist. Eine Füllung oder eine bestimmte Anzahl von Füllungen des Eingabebehälters 41 kann dabei als Verrechnungseinheit zur Berechnung von Annahmegebühren benutzt werden.

Zur Gewährleistung eines beaufsichtigungslosen Betriebs ist hier ein Zahlungsmittelannahmeautomat 43 vorgesehen, der nach Annahme eines geeigneten Zahlungsmittels den Antrieb der Zerkleinerungseinrichtung 2 chargenweise, d.h. so aktiviert und den Eingabebehälter in einer Weise freigibt, daß die bezahlten Füllungen des Eingabebehälters 41 durchgesetzt werden können.

Die Schwenkbewegung des Eingabebehälters 41 kann von Hand oder mittels eines hier nicht näher dargestellten Hubaggregats bewerkstelligt werden, das von Hand oder durch eine Automatik gesteuert werden kann. Im Falle eines motorischen Schwenkantriebs des Eingabebehälters kann dieser durch eine durch einen Startknopf 43d des Zahlungsmittelannahmeautomaten 43 angedeutete Starteinrichtung aktiviert werden. Der Zahlungsmittelannahmeautomat 43 ist mit einer Eingabeeinrichtung und einer Rückgabeeinrichtung sowie mit einem Anzeigemodul 43c versehen, auf dem die bezahlten, noch nicht verbrauchten Eingabechargen bzw. der Grund einer Annahmesperre angezeigt werden können. Zur Gewährleistung eines zuverlässigen Notstops der Zerkleinerungseinrichtung 2 ist ein als Bügel ausgebildeter Notschalter 45 vorgesehen, mittels dessen der Antrieb der Zerkleinerungseinrichtung 2, vorzugsweise sämtliche Antriebe, passivierbar ist bzw. sind.

Der fertige Kompost wird aus dem Bunker 3 entnommen. Dieser ist mit einer Ausgabeeinrichtung 51 versehen. Die Ausgabeeinrichtung kann als einfaches, durch eine Absperreinrichtung absperrbares Auslaßrohr ausgebildet sein. Die Auslaßeinrichtung 51 ist zur Bewerkstelligung eines beaufsichtigungslosen Selbstbedienungsbetriebs mit einer Portioniereinrichtung 53 versehen, die durch Bezahlung am zugeordneten Zahlungsmittelannahmeautomaten 54 aktivierbar ist. Der Aufbau des Zahlungsmittelannahmeautomaten 54 entspricht praktisch dem weiter oben näher dargelegten Aufbau des eingangsseitigen Zahlungsmittelannahmeautomaten 43, mit dem Unterschied, daß auf dem Anzeigemodul die Anzahl der bezahlten, noch nicht entnommenen Chargen bzw. der Grund der Sperre angezeigt werden.

Die Füllung des Bunkers 3 wird durch mindestens zwei, den beiden Extremwerten zugeordnete, oder mehrere Fühler der bei 56 angedeuteten Art abgetastet. Im Falle mehrerer Fühler können diese so geschaltet sein, daß der oder die Mittleren einen Nachfüllbefehl an die Trommel 1 und die zum Bunker führenden Transportorgane geben. Hierbei erfolgt somit bereits eine Nachfüllung, solange noch Vorrat im Bunker 3 vorhanden ist, so daß die Ausgabe von Kompost nicht unterbrochen werden muß. Die Extremwertefühler sperren die Ausgabe bzw. Nachfüllung.

Anstelle des hier ein Kompostlager bildenden Bunkers 3 wäre es selbstverständlich auch denkbar, diesen zum Nachreifen in Form von Mieten abzulegen. Hierzu kann ein durch das Förderband 22 direkt oder unter Zwischenschaltung des Elevatorrads 26 und einer mit diesem zusammenwirkenden Beschickungseinrichtung indirekt beaufschlagbarer, vorzugsweise den Lagerplatz etwa halbkreisförmig überstreichender, also mit seinem trommelseitigen Ende um eine vertikale Achse schwenkbarer Längsförderer als Ausbringeinrichtung vorgesehen sein.

## Patentansprüche

1. Vorrichtung zur Herstellung von Kompost, insbesondere aus Haus- und/oder Gartenabfällen oder dergleichen, mit einer um ihre im wesentlichen liegend verlaufende Längsachse rotierend antreibbaren, vorwärts und rückwärts rotierbaren Trommel (1), die einen zumindest teilweise durch Lochbleche (5) gebildeten, mit Luken (60), die jeweils durch eine innenliegende, um eine trommelachsparallele Schwenkachse schwenkbar gelagerte Klappe (61) verschließbar sind, versehenen Mantel aufweist und von einer etwa achsparallel angeordneten vorwärts und rückwärts antreibbaren Längsfördereinrichtung (22) unterfaßt ist, mittels welcher das aus der Trommel (1) herausfallende Material wahlweise einem Kompostlager (3) oder einer im Bereich einer Trommelstirnseite angeordneten Hubfördereinrichtung (26) zuförderbar ist, die mit einer im oberen Bereich der Trommel (1) angeordneten Beschickungseinrichtung (33) zusammenwirkt, **dadurch gekennzeichnet, daß** die im Bereich des Trommelmantels vorgesehenen Luken (60) zumindest teilweise jeweils als in einem einen Sammelbereich von Grobmaterial bildenden Längenabschnitt der Trommel (1) angeordnete Auswurfluke ausgebildet sind, deren jeweils zugeordnete Klappe (61) frei schwenkbar angeordnet ist und unter der Wirkung der an ihr angreifenden Schwerkraft je nach Drehrichtung der Trommel (1) aus einer Pendelstellung im oberen Bereich der Trommel entweder in eine die zugeordnete Luke (60) verschließende Stellung verbringbar oder neben dieser auf dem Trommelmantel ablegbar ist.

2. Vorrichtung nach Anspruch 1, **dadurch gekennzeichnet, daß** mehrere, umfangsmäßig gegeneinander versetzte und im Bereich desselben Längenabschnitts der Trommel (1) angeordnete, als Auswurfluken ausgebildete Luken (60) vorgesehen sind.

3. Vorrichtung nach wenigstens einem der vorhergehenden Ansprüche, **dadurch gekennzeichnet, daß** der mit wenigstens einer als Auswurfluke ausgebildeten Luke (60) versehene Längenabschnitt der Trommel (1) im Bereich des in Beschickungsrichtung der vorzugsweise im Bereich einer Trommelstirnseite endenden Beschikkungseinrichtung (33) vorderen Trommelendes vorgesehen ist.

4. Vorrichtung nach wenigstens einem der vorhergehenden Ansprüche, **dadurch gekennzeichnet, daß** wenigstens eine mittels der die Trommel (1) unterfassenden Längsfördereinrichtung (22) direkt oder indirekt mit aus der Trommel (1) herausfallendem Material beaufschlagbare Zerkleinerungseinrichtung (65 bzw. 71 bzw. 2) vorgesehen ist.

5. Vorrichtung nach Anspruch 4, **dadurch gekennzeichnet, daß** wenigstens eine Zerkleinerungseinrichtung (65) in einem durch die Längsfördereinrichtung (22) beaufschlagbaren Schacht (66) angeordnet ist, der eine die Hubfördereinrichtung (26) übergreifende, vorzugsweise einstellbare Abwurfkante aufweist, und daß die Zerkleinerungseinrichtung (65) wenigstens eine Scheibenwalze (67), vorzugsweise mehrere, miteinander kämmende Scheibenwalzen (67) mit vorzugsweise sternförmigen, seitlich gegeneinander versetzten Messerscheiben (68) aufweist, wobei vorzugsweise mindestens eine in der Höhe verstellbare Scheibenwalze (67) im Eingriff mit wenigstens einer stationären, vorzugsweise als Rost mit Durchlaufschlitzen für die Messer der Scheibenwalze ausgebildeten Gegenleiste (67a) ist.

6. Vorrichtung nach Anspruch 4, dadurch gekennzeichnet, daß die mittels der Hubfördereinrichtung (26) beaufschlagbare Beschickungseinrichtung (33) mit wenigstens einer Zerkleinerungseinrichtung (71) versehen ist, wobei vorzugsweise die im Bereich des der Hubfördereinrichtung (26) benachbarten Trommelendes endende Beschickungseinrichtung eine Förderschnecke (33) enthält, die zumindest auf einem Teil ihrer Länge mit umfangsseitig angeordneten, mehrere Schnekkenwindungen miteinander verbindenden Messern (72) versehen ist, die an wenigstens einem stationären Gegenmesser (73) des Schneckengehäuses vorbeilaufen.

7. Vorrichtung nach Anspruch 4 mit wenigstens einer Eingangszerkleinerungseinrichtung zur Zerkleinerung des Eingangsmaterials, die vorzugsweise bezüglich der durch sie beaufschlagbaren Fördereinrichtung (26a) der Trommel (1) gegenüberliegend angeordnet ist, dadurch gekennzeichnet, daß die Hubfördereinrichtung (26a) zwei parallele, durch die Längsfördereinrichtung (22) bzw. die Eingangszerkleinerungseinrichtung (2) beaufschlagbare Hubförderer (74 bzw. 75) aufweist und daß die Beschickungseinrichtung (33a) zwei durch jeweils einen Hubförderer (74 bzw. 75) beaufschlagbare Beschickerorgane (77, 79 bzw. 78, 80) aufweist, von denen das mittels des der Längsfördereinrichtung (22) zugeordneten Hubförderers (74) beaufschlagbare Beschickerorgan (77, 79) vorwärts und rückwärts antreibbar ist und einerseits die Trommel (1) und andererseits die Eingangszerkleinerungseinrichtung (2) beaufschlagt, wobei vorzugsweise die Hubfördereinrichtung (26a) als Doppelelevatorrad mit nebeneinander angeordneten, der Längsfördereinrichtung (22) bzw. der Eingangszerkleinerungseinrichtung (2) zugeordneten Kränzen (74 bzw. 75) von in Umfangsrichtung hintereinander angeordneten Kammern (76) ausgebildet ist, die im oberen Scheitelbereich von nebeneinander angeordneten Zuführtrichtern (77 bzw. 78) untergriffen sind, von denen parallele Förderschnecken (79, 80) abgehen.

8. Vorrichtung nach einem der vorhergehenden Ansprüche, dadurch gekennzeichnet, daß der Lochdurchmesser der den Trommelmantel bildenden Lochbleche (5) in dem mit wenigstens einer Luke (60) versehenen Längenabschnitt der Trommel (1) am größten ist und mit steigender Entfernnung hiervon abnimmt.

9. Vorrichtung nach einem der vorhergehenden Ansprüche, dadurch gekennzeichnet, daß die vorzugsweise ein durch Längs- und Querholme (4) gebildetes, durch Lochbleche (5) ausgefachtes Traggerüst enthaltende Trommel (1) zumindest in ihrem mit wenigstens einer Luke (60) versehenen Bereich einen mehreckförmigen, vorzugsweise achteckigen Querschnitt mit ebenem Umfangsflächenabschnitten aufweist, die zumindest teilweise mit mindestens einer Luke (60) versehen sind, deren Erstreckung in Umfangsrichtung weniger als der halben Querschnittskantenlänge entspricht und deren zugeordnete, vorzugsweise aus Lochblech bestehende Verschlußklappe (61) etwa im Bereich der Querschnittskantenmitte gelagert ist.

10. Vorrichtung nach einem der vorhergehenden Ansprüche, dadurch gekennzeichnet, daß im Bereich beider Stirnseiten der Trommel (1) jeweils eine mittels der vorzugsweise am Grund eines die Trommel (1) V-förmig unterfassenden Schachts (23) angeordneten Längsfördereinrichtung (22) beaufschlagbare Hubfördereinrichtung (26) vorgesehen ist, wobei mittels der von der Beschickungseinrichtung (33) entfernten Hubfördereinrichtung (26) ein vorzugsweise als Bunker (3) ausgebildetes Kompostlager beaufschlagbar ist, wobei vorzugsweise der Bunker (3) mit einer Ausgabeeinrichtung (51) versehen ist, die eine Portioniereinrichtung (53) aufweist, die mittels eines vorzugsweise einen Startknopf aufweisenden Zahlungsmittelannahmeautomaten (54) chargenweise aktivierbar ist.

11. Vorrichtung nach einem der vorhergehenden Ansprüche, dadurch gekennzeichnet, daß die Trommel (1) zwei feststehende Stirnwände aufweist, zwischen denen der bewegliche Mantel aufgenommen ist, der mit umfangsseitig umlaufenden Laufringen (9) versehen ist, die auf mit Abstand einander gegenüberliegenden Laufrollen (10) aufgenommen sind, von denen wenigstens eine wahlweise vorwärts und rückwärts antreibbar ist.

12. Vorrichtung nach einem der vorhergehenden Ansprüche, dadurch gekennzeichnet, daß die Eingangszerkleinerungseinrichtung (2) mit einem abwechselnd befüll-und entleerbaren, vorzugsweise mittels eines zugeordneten Motors bewegbaren Eingabebehälter (41) versehen ist, dessen Aufnahmevermögen wesentlich kleiner als der Inhalt der Trommel ist, wobei vorzugsweise die Eingangszerkleinerungseinrichtung (2) und deren Eingabebehälter (41) mittels eines einen Startknopf aufweisenden Zahlungsmittelannahmeautomaten (43) chargenweise aktivierbar sind.

## Claims

1. An apparatus for producing compost, more particularly from household and/or garden waste or the like, comprising a drum (1) adapted to be rotated in both directions and to be driven about its substantially level longitudinal axis and which has a casing formed at least partly by encircling perforated sheeting (5) and which has openings (60) able to be shut respectively by means of an inner door (61) pivoting about a pivot axis parallel to the axis of the drum, and has an underlying longitudinal conveying device (22) able to be driven in both directions and extending approximately parallel to the axis of the drum, by means of which conveying device the material falling from the drum (1) may be selectively passed to a compost dump (3) or to an upright conveying device (26) arranged adjacent to one end side of the drum, which upright conveying device (26) cooperates with a charging device (33) arranged in the top part of the drum (1), characterized in that the openings (60) provided in the drum casing are at least partly each designed as an ejection opening arranged in a section of the length of the drum (1) constituting a collecting zone for coarse material, the respectively associated door (61) thereof being arranged so that, dependent on the direction of rotation of the drum (1), it may freely move under the effect of gravity acting thereon out of a dependent position in the upper part of the drum either into a setting closing the associated opening (60) or can be laid down in engagement with the drum casing adjacent to this.

2. The apparatus as claimed in claim 1, characterized in that a multiplicity of openings (60) are provided, which are peripherally offset from each other, are arranged within the same longitudinal section of the drum (1) and are designed in the form of ejection openings.

3. The apparatus as claimed in at least one of the preceding claims, characterized in that the longitudinal section, provided with at least one opening (60) designed in the form of an ejection opening, of the drum (1) is provided adjacent to the drum end which is to the front in the direction of charging of the charging device (33) ending preferably adjacent to one end side of the drum.

4. The apparatus as claimed in at least one of the preceding claims, characterized in that at least one comminuting device (65 or, respectively, 71 or, respectively, 2) is provided which is able to be directly or indirectly charged with material dropping out of the drum (1) by means of the longitudinal conveying device (22) fitted underneath the drum.

5. The apparatus as claimed in claim 4, characterized in that at least one comminuting device (65) is arranged in an upright passage (66) adapted receive material from the longitudinal conveying device (22) and which has a preferably adjustable ejection ledge extending over the upright conveying device, and in that the comminuting device (65) has at least one disk roll (67) and preferably more than one disk roll (67) fitting into each other with preferably stellate, laterally offset knife disks (68), preferably at least one disk roll (67), which is able to be adjusted in height, is in engagement with at least one stationary cooperating rail (67a) preferably designed in the form of a grating with slots extending therethrough for the knives of the disk roll.

6. The apparatus as claimed in claim 4, characterized in that the charging device (33) adapted to be charged by means of the upright conveying device (26) is furnished with at least one comminuting device (71), at least the charging device (26) ending adjacent to drum end at the upright conveying device (26) comprising a conveying screw (33), which for at least a part of its length is provided with peripherally arranged knives (72) connecting a plurality of screw turns with each other, which knives extend past at least one stationary cooperating knife (73) of the screw housing.

7. The apparatus as claimed in claim 4 comprising at least one input comminuting device for comminuting the input material, which, preferably with respect to the charging device (26a) charging it, is arranged opposite to the drum (1), characterized in that the upright conveying device (26a) has two parallel upright conveyors (74 and, respectively, 75) able to be charged by the longitudinal conveying device (22) or, respectively, input comminuting device (2) and in that the charging device (33a) has two charging elements (77, 79 and, respectively, 78 80) adapted to be charged by a respective upright conveyor (74 and, respectively, 75), of which charging elements the charging element (77 and 79) adapted to be charged by the upright conveyor (74) associated with the longitudinal conveying device (22), is able to be driven backwards and forwards and on the one hand charges the drum (1) and on the other hand charges the input comminuting device (2), the upright conveying device (26a) being preferably designed as a twin elevator wheel with adjacently arranged rings (74 and, respectively, 75) of chambers (76) arranged one after the other in the peripheral direction, such rings being associated with the longitudinal conveying device (22) and, respectively, the input comminuting device (2), which chambers have underlying supply hoppers (77 and, respectively, 78), which are arranged adjoiningly in the upper head part, from which hoppers parallel conveying screws (79 and 80) extend.

8. The apparatus as claimed in any one of the preceding claims, characterized in that the diameter of the perforations in the sheeting constituting the casing of the drum is maximum in the longitudinal section of the drum (1) furnished with at least one opening (60) and decreases with an increase in the distance therefrom.

9. The apparatus as claimed in any one of the preceding claims, characterized in that the drum (1) preferably comprising a support framework constituted by longitudinal and transverse beams (4) and spread out by means of perforating sheeting (5) has, at least in its part provided with at least one opening (60), a polygonal and preferably octagonal cross section with flat peripheral surface portions, which are at least partly furnished with at least one opening (60), whose extent in the peripheral direction is somewhat less than half the cross section edge length and whose associated closing door (61) preferably consisting of perforated sheeting, is arranged generally adjacent to middle of the cross section edge.

10. The apparatus as claimed in any one of the preceding claims, characterized in that associated with the two end sides of the drum (1) respectively an upright conveyor device (26) is provided adapted to be charged by means of the longitudinal conveying device (22) arranged preferably at the bottom of a vertical passage (23) fitting under the drum (1) like a letter V, it being possible for a compost dump, which is preferably in the form of a silo (3), to be charged by means of the upright conveying device (26) remote from charging device (33), such silo (3) being furnished with an output device (51), which comprises a parcelling device (53), which may be into operation for each batch by means of an automatic money receiving device (54) which preferably has a start button.

11. The apparatus as claimed in any one of the preceding claims, characterized in that the drum (1) has two stationary end walls, between which the moving casing is received, which is furnished with circumferentially arranged encircling runner rings (9), which are mounted on opposite rollers (10) having a distance between them, of which at least one is able to be driven backwards and forwards.

12. The apparatus as claimed in any one of the preceding claims, characterized in that the input comminuting device (2) is furnished with a alternatingly filled and emptied input container (41), which is preferably moved by means of an associated motor, the capacity of the container (41) being substantially less than the content of the drum, the input comminuting device (2) and its input container (41) preferably being able to be put into operation batchwise by means of an automatic money receiving device (43) which has a start button.

## Revendications

1. Appareil pour la fabrication de compost composé notamment de déchets ménagers et / ou de jardin ou similaires, comportant un tambour (1) pouvant tourner en avant et en arrière, pouvant être entraîné de manière rotative autour d'un axe longitudinal généralement horizontal, tambour qui présente une enveloppe constituée au moins partiellement de tôles perforées (5) et munie de lucarnes (60) qui peuvent chacune être fermées par un clapet (61) intérieur monté de manière pivotante autour d'un axe de pivotement parallèle à l'axe du tambour, sous lequel passe un convoyeur longitudinal (22) pouvant être entraîné en avant et en arrière et disposé approximativement parallèlement à l'axe à l'aide duquel les matériaux tombant du tambour (1) peuvent être acheminés, au choix, soit vers un réservoir de compost (3), soit vers un convoyeur-élévateur (26) disposé dans la zone d'un côté frontal du tambour qui coopère avec un dispositif d'alimentation (33) disposé dans la zone supérieure du tambour (1), caractérisé en ce que les lucarnes (60) prévues dans la zone de l'enveloppe du tambour sont réalisées sous la forme de lucarnes d'évacuation disposées chaque fois dans un tronçon longitudinal du tambour (1) formant un espace collecteur pour les matériaux grossiers, lucarnes dont le clapet (61) qui leur est chaque fois associé est disposé de manière à pivoter librement et peut passer, sous l'action de la force de pesanteur, en fonction du sens de rotation du tambour (1), d'une position verticale dans la zone supérieure du tambour, à une position permettant d'obturer la lucarne (60) à laquelle il est associé ou à une position dans laquelle il repose sur l'enveloppe du tambour, à côté de la lucarne.

2. Appareil selon la revendication 1, caractérisé en ce que plusieurs lucarnes (60) réalisées sous la forme de lucarnes d'évacuation et décalées les unes par rapport aux autres sur le pourtour sont disposées dans la zone du même tronçon longitudinal du tambour (1).

3. Appareil selon au moins l'une des revendications précédentes, caractérisé en ce que le tronçon longitudinal du tambour (1) muni d'au moins une lucarne (60) réalisée sous la forme d'une lucarne d'évacuation est prévu dans la zone de l'extrémité du tambour située à l'avant par rapport au sens d'alimentation du dispositif d'alimentation (33) débouchant de préférence dans la zone d'un côté frontal du tambour.

4. Appareil selon au moins l'une des revendications précédentes, caractérisé en ce qu'au moins un dispositif de broyage (65 ou 71 ou 2) pouvant être alimenté directement ou indirectement en matériaux tombés du tambour (1) à l'aide du convoyeur longitudinal (22) passant sous le tambour (1) est prévu.

5. Appareil selon la revendication 4, caractérisé en ce qu'au moins un dispositif de broyage (65) est disposé dans un carter (66) pouvant être alimenté par le convoyeur longitudinal (22), carter qui présente une arête de déversement de préférence réglable et faisant saillie dans le convoyeur-élévateur (26), et en ce que le dispositif de broyage (65) présente au moins un cylindre à disque (67), de préférence plusieurs cylindres à disque (67) engrènant les uns dans les autres avec des disques à couteaux (68) de préférence en forme d'étoile et décalés latéralement les uns par rapport aux autres, au moins un cylindre à disque (67) réglable en hauteur étant de préférence en engrènement avec au moins une contre-butée (67a) réalisée sous forme de grille avec des fentes de passage pour les couteaux du cylindre à disque.

6. Appareil selon la revendication 4, caractérisé en ce que le dispositif d'alimentation (33) pouvant être alimenté au moyen du convoyeur-élévateur (26) est muni d'au moins un dispositif de broyage (71), le dispositif d'alimentation débouchant dans la zone de l'extrémité du tambour adjacente au convoyeur-élévateur (26) comprenant, de préférence, une hélice transporteuse (33), laquelle est munie, au moins sur une partie de sa longueur, de couteaux (72) disposés sur le pourtour et reliant plusieurs spires entre elles, qui passent devant au moins un contre-couteau (73) du carter de l'hélice.

7. Appareil selon la revendication 4 comportant au moins un dispositif de broyage d'entrée pour broyer les matériaux à l'entrée, qui est disposé à l'opposé du convoyeur (26a) du tambour (1) qu'il alimente, caractérisé en ce que le convoyeur-élévateur (26a) présente deux élévateurs (74 ou 75) parallèles pouvant être alimentés par le convoyeur longitudinal (22) ou par le dispositif de broyage d'entrée (2), et en ce que le dispositif d'alimentation (33a) présente deux organes d'alimentation (77, 79 ou 78, 80) pouvant chacun être alimentés par un élévateur (74 ou 75), et dont l'organe d'alimentation (77, 79) pouvant être alimenté par l'élévateur (74) associé au convoyeur longitudinal (22) peut être entraîné en avant et en arrière et alimente, d'une part, le tambour (1) et, d'autre part, le dispositif de broyage d'entrée (2), le convoyeur-élévateur (26a) étant de préférence réalisé sous la forme d'une roue d'élévateur double comportant des couronnes (74 ou 75) de godets (76) disposés l'un derrière l'autre en direction du périmètre, lesquelles sont disposées côte à côte et associées au convoyeur longitudinal (22) ou au dispositif de broyage d'entrée (2), des cônes d'alimentation (77 ou 78) disposés côte à côte dans la zone supérieure et desquels partent des transporteurs à hélice (79, 80) parallèles passant sous ces godets.

8. Appareil selon l'une des revendications précédentes, caractérisé en ce que le diamètre des trous des tôles perforées (5) constituant l'enveloppe du tambour est le plus grand sur le tronçon longitudinal du tambour (1) muni d'au moins une lucarne (60) et diminue plus on s'en éloigne.

9. Appareil selon l'une des revendications précédentes, caractérisé en ce que le tambour (1) comprenant un cadre porteur constitué, de préférence, de montants longitudinaux et transversaux (4) et compartimenté par des tôles perforées (5) présente, dans la zone munie d'au moins une lucarne (60), une section polygonale, de préférence octogonale, avec des tronçons circonférentiels plans et munis, au moins partiellement, d'au moins une lucarne (60), dont l'étendue en direction du périmètre correspond à moins de la moitié de la longueur des arêtes de section et dont le clapet de fermeture (61) qui leur est associé constitué, de préférence, de tôles perforées est monté approximativement dans la zone du milieu de l'arête de section.

10. Appareil selon l'une des revendications précédentes, caractérisé en ce que, dans la zone des deux côtés frontaux du tambour (1), est prévu un convoyeur-élévateur (26) pouvant être alimenté à l'aide du convoyeur longitudinal (22) disposé, de préférence, à la base d'une cuve (23) passant en forme de V sous le tambour (1), un réservoir de compost réalisé, de préférence, sous forme de silo (3) pouvant être alimenté au moyen du convoyeur-élévateur (26) éloigné du dispositif d'alimentation (33), le silo (3) étant, de préférence, muni d'un dispositif d'évacuation (51) présentant un dispositif de dosage (53) qui peut être activé, charge après charge, à l'aide d'un automate de paiement (54) présentant un bouton de mise en marche.

11. Appareil selon l'une des revendications précédentes, caractérisé en ce que le tambour (1) présente deux parois frontales fixes, entre lesquelles est logée l'enveloppe mobile munie d'anneaux de roulement (9) qui en font tout le tour et qui sont montés sur des galets de roulement (10) écartés les uns des autres dont au moins un, quel qu'il soit, peut être entraîné en avant et en arrière.

12. Dispositif selon l'une des revendications précédentes, caractérisé en ce que le dispositif de broyage d'entrée (2) est muni d'un réservoir de chargement (41) pouvant être actionné, de préférence, au moyen d'un moteur qui lui est associé et, alternativement, rempli et vidé, réservoir dont la capacité est bien inférieure à celle du tambour, le dispositif de broyage d'entrée (2) et son réservoir de chargement (41) pouvant être activés, charge après charge, au moyen d'un automate de paiement (43) présentant un bouton de mise en marche.
